Europäisches Patentamt

(19) European Patent Office

Office européen des brevets

(11) Numéro de publication: **0 300 934**
**A1**

## (12) DEMANDE DE BREVET EUROPEEN

(21) Numéro de dépôt: **88420261.5**

(22) Date de dépôt: **22.07.88**

(51) Int. Cl.⁴: **G 02 B 26/08**
**G 01 C 3/10**

(30) Priorité: **24.07.87 FR 8710715**

(43) Date de publication de la demande:
**25.01.89 Bulletin 89/04**

(84) Etats contractants désignés:
**AT BE CH DE ES FR GB IT LI NL SE**

(71) Demandeur: **NEYRPIC**
**75 rue du Général Mangin**
**F-38100 Grenoble (FR)**

(72) Inventeur: **Bouillot, Lucien**
**26, rue du Pré d'Elle**
**F-38240 Meylan (FR)**

**Barthelemy, Bernard**
**50, la Chanteraie**
**F-38640 Claix (FR)**

(74) Mandataire: **Karmin, Roger et al**
**Cabinet MONNIER 150, cours Lafayette**
**F-69003 Lyon (FR)**

(54) Projecteur de rayon laser et dispositif de mesure à distance comportant au moins deux de ces projecteurs.

㊿ Le dispositif de mesure comprend deux projecteurs de rayons laser (I, II) pilotés et asservis en position. Chacun d'eux comprend une broche tournante de 180° dans une direction et dans une autre à partir d'un certain point et une tête solidaire de cette broche et tournant de 90° dans un sens et dans l'autre à partir d'une origine. Cette tête porte un prisme (18) qui reçoit dans chaque projecteur un rayon laser (15a, 15b) issu d'une unique source (21). La rotation de la broche (2) et celle de la tête permet à chaque crayon de balayer tous les points d'un hémisphère. Un calculateur permet de transformer les coordonnées angulaires en coordonnées cartésiennes.

*Fig. 2*

**EP 0 300 934 A1**

**Description**

On sait qu'il existe des dispositifs pour mesurer précisément la position d'un point par rapport à son environnement ou les positions successives de ce point s'il est mobile. Les dispositifs en question comprennent par exemple deux théodolites et un micro-ordinateur dans lequel les coordonnées relevées par les théodolites sont entrées pour transformer les coordonnées polaires en coordonnées cartésiennes.

Toutefois, les théodolites électroniques sont difficiles à pointer sur un point avec précision étant donné que le pointage est fait de manière optique, avec tous les aléas que cela comporte.

Les perfectionnements qui font l'objet de la présente invention visent à réaliser un projecteur de rayon laser qui, en association avec un autre, permette de déterminer les coordonnées d'un ou plusieurs points dans l'espace, à distance et sans contact physique avec ceux-ci afin de déterminer les dimensions ou la forme d'un objet, les rayons laser permettant, grâce à leur "spot", d'être exactement pointés aux endroits désirés. Ainsi, le dispositif suivant l'invention est-il beaucoup plus pratique à utiliser que les appareils de mesure connus puisqu'on matérialise le point d'impact de chacun des rayons destinés au repérage du ou des points dont on désire les coordonnées.

A cet effet, on utilise deux projecteurs comprenant chacun un boîtier, une broche montée à rotation dans le boîtier de manière à pouvoir se déplacer angulairement pas à pas d'au moins 360°, ladite broche étant solidaire d'une tête montée à rotation autour d'un axe géométrique orthogonal à celui de rotation de la broche , des moyens optiques d'amener le rayon laser dans l'axe géométrique de la tête après qu'il ait traversé la broche suivant un trajet confondu avec ledit axe et un prisme solidaire de la tête et propre à réfléchir le rayon laser dans un plan mobile renfermant l'axe géométrique de la broche.

Les moyens optiques comprennent un premier prisme séparateur et un ensemble de prismes monté sur la broche afin d'amener le rayon dans le centre de la tête qui est animée d'un mouvement de rotation de 180°, soit 90° dans une direction et 90° dans l'autre, à partir d'une origine déterminée.

Le dispositif de mesure à distance suivant l'invention comprend un unique émetteur de rayon laser alimentant les deux projecteurs à la fois, ainsi que des moyens de transmettre des valeurs angulaires des points de rencontre des deux rayons laser à un calculateur qui fournit les données cartésiennes desdits points ou vice versa.

Le dessin annexé, donné à titre d'exemple, permettra de mieux comprendre l'invention, les caractéristiques qu'elle présente et les avantages qu'elle est susceptible de procurer :

Fig. 1 est une coupe transversale d'un projecteur établi conformément à l'invention.

Fig. 2 montre schématiquement la constitution d'un dispositif de mesure à distance comportant deux projecteurs tels que celui illustré en fig. 1.

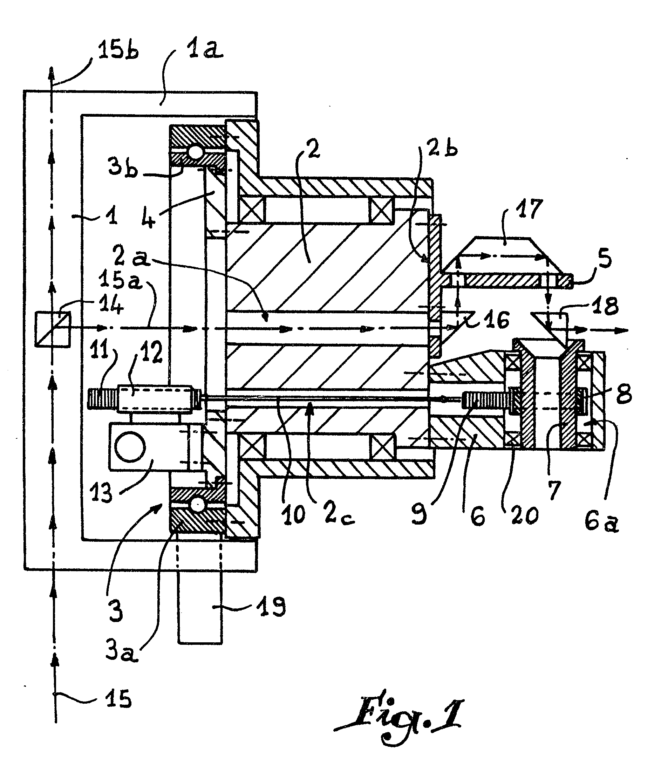

Le projecteur illustré en fig. 1 comprend essentiellement un boîtier fixe 1 dans lequel tourne une broche "azimut" 2. La rotation de la broche est assurée par un roulement de haute précision 3 dont la cage extérieure 3a est fixée à un fourreau tubulaire 1a prolongeant le boîtier 1, tandis que sa couronne intérieure 3b est assujettie à la broche 2 par l'intermédiaire d'une bride 4. La broche 2 comporte un alésage central 2a dont le rôle sera mieux expliqué plus loin. L'extrémité externe 2b de la broche 2 porte un support 5 dont la partie active se dresse perpendiculairement à ladite face, c'est-à-dire qu'il se trouve parallèle à l'axe géométrique de l'alésage 2a.

La face 2b de la broche 2 porte encore un palier 6 pourvu d'un alésage 6a orienté perpendiculairement au support 5 et dans lequel est montée à rotation une tête 7. Cette dernière est entourée d'un pignon 8 qui engrène avec une crémaillère 9 associée à l'extrémité d'une tige 10, traversant la broche 2 dans un trou longitudinal 2c et dont l'extrémité opposée est associée à une autre crémaillère 11 engrenant avec un pignon 12 entraîné en rotation par un ensemble de motorisation 13 solidaire de la bride 4 et tournant en conséquence avec la broche 2. La précision de l'ensemble 13 est telle qu'elle permet d'obtenir des incréments de l'ordre du millième de degré.

On observe que le boîtier 1 supporte un prisme séparateur 14 propre à envoyer une partie 15a d'un rayon laser 15 suivant l'axe géométrique de l'alésage 2a de manière qu'il pénètre dans un prisme 16 envoyant ce rayon orthogonalement par rapport à l'axe géométrique de la broche 2 afin qu'il arrive sur un prisme 17 porté par le support 5 et qui est organisé de manière que le rayon laser 15a soit envoyé dans l'axe géométrique de la tête 7 afin qu'il vienne coopérer avec un prisme 18 porté par cette tête et qui réfléchit le rayon 15a dans un plan mobile contenant l'axe géométrique de la broche 2.

La couronne 3b du roulement 3 est associée à un moteur pas à pas 19 assurant une rotation de 180° dans un sens et dans un autre de la broche 2 à partir d'un point déterminé avec une précision angulaire de 1 millième de degré.

L'ensemble de motorisation 13 permet quant à lui une rotation dans un sens et dans l'autre du pignon 12 de manière que grâce aux crémaillères 11 et 9, la tête 7 puisse pivoter autour de son axe géométrique de 90° dans une direction et de 90° dans l'autre à partir d'une origine déterminée.

On note enfin que des roulements de haute précision 20 assurent la rotation de la tête 7 par rapport au support 6.

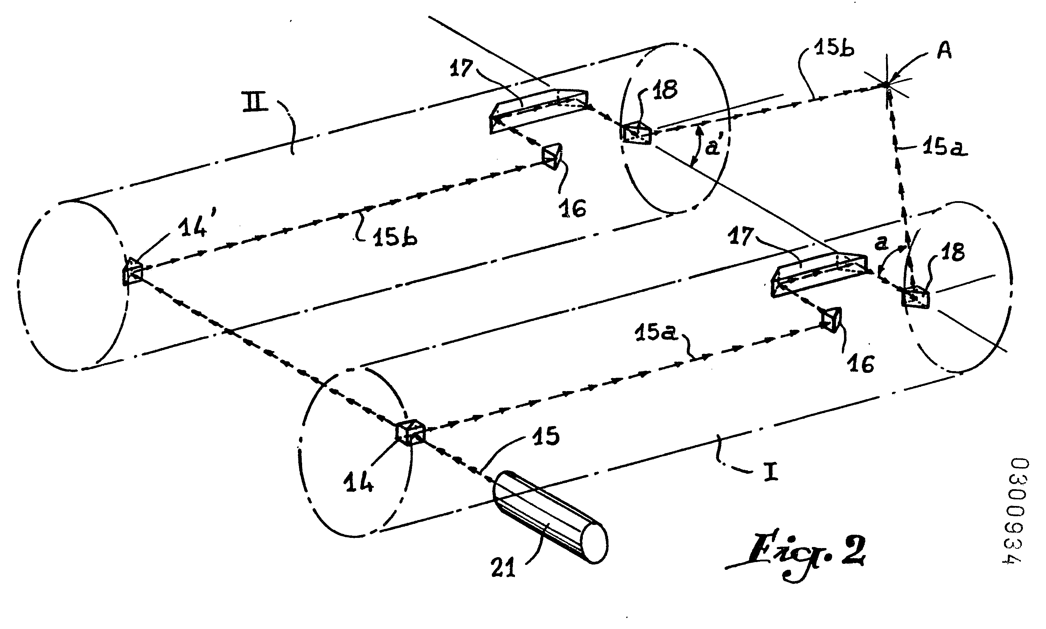

Dans l'exemple illustré en fig. 2, on a schématisé par deux cylindres I et II deux projecteurs tels que celui illustré en fig. 1. On observe sur cette figure la source émettrice 21 du rayon laser 15 et les prismes de chacune des têtes. On note que le prisme d'entrée de la tête II à été référencée 14' car il ne s'agit pas d'un prisme séparateur, mais d'un simple prisme de renvoi, les autres prismes de cette tête référencée 16, 17 et 18 sont rigoureusement semblables à ceux portant les mêmes références dans le projecteur I. On a référencé 15b le rayon laser pénétrant dans le projecteur II.

Le fonctionnement découle des explications qui précèdent :

Le rayon laser 15 issu de la source 21 traverse d'abord le prisme séparateur 14 qui permet à ce rayon d'être envoyé d'une part perpendiculairement à sa direction générale pour former un premier rayon 15a confondu avec l'axe géométrique de l'alésage 2a et de traverser ce prisme pour arriver à celui 14' qui le dévie suivant un second rayon 15b pénétrant dans le projecteur II. De cette manière, les deux projecteurs émettent chacun un rayon laser orientable. En effet, la combinaison des rotations de la broche 2 de chaque projecteur I et II et de la tête 7 permet le balayage de la totalité d'un hémisphère par le rayon de chacun desdits projecteurs.

On note que les deux projecteurs I et II sont asservis en position et situés dans un même plan et à une distance connue l'un de l'autre. On pointe le rayon de chaque projecteur sur le point A dont on désire les coordonnées. Connaissant les valeurs angulaires a, a' indiquées par chacun des projecteurs, les coordonnées cartésiennes du point considéré sont obtenues par un calcul trigonométrique. Ce calcul peut être effectué au moyen d'un calculateur tel qu'un ordinateur permettant le calcul automatique ainsi que la cartographie dans les trois dimensions de l'ensemble des mesures sur écran ou sur table traçante. De même, à partir de relevés antérieurs, une vérification dans le temps est également possible.

Le pilotage des deux projecteurs I et II se fait selon les deux hypothèses suivantes :

1- On peut pointer à vue chacun des rayons laser 15a, 15b sortant des deux appareils I et II sur un point A ou un objet donné à l'aide de manettes non représentées agissant sur les deux ensembles de motorisation 13 et 19. Lorsque le pointé est jugé bon, l'ordre est donné à l'ordinateur de calculer les coordonnées des points visés.

2- Au contraire on entre les coordonnées connues du point A ou de l'objet à viser dans l'ordinateur qui calcule d'abord les valeurs angulaires et ensuite commande le pointage de chaque rayon laser sur le point correspondant aux coordonnées sélectionnées.

On a ainsi réalisé un appareil susceptible d'effectuer des mesures à distance et sans contact physique avec les objets, et de réaliser des contrôles tridimensionnels en milieu normal ou en milieu hostile grâce à un système de protection. En particulier, l'appareil suivant l'invention permet d'effectuer des mesures de pièces disposées dans une enceinte soumise aux rayonnements d'un combustible nucléaire. Le système de protection peut être réalisé au moyen d'une enveloppe constituée d'une feuille très mince de "milard", matériau composite très perméable aux rayons laser mais qui ne dévie pas le faisceau lorsque celui-ci présente un angle d'incidence par rapport à ladite enveloppe.

Le calculateur du dispositif suivant l'invention permet une utilisation simple et la connaissance immédiate des résultats des contrôles qui sont d'une grande précision, c'est-à-dire d'environ 2 millimètres à 10 mètres de distance (2/10000).

L'établissement d'une cartographie simultanée permet de connaître la forme et les dimensions des objets contrôlés, de même que la comparaison des résultats ou des cartographies entre deux campagnes de contrôle autorisant ainsi le suivi de l'évolution des formes en question dans le temps.

**Revendications**

1. Projecteur de rayon laser, caractérisé en ce qu'il comprend un boîtier fixe (1), une broche (2) montée à rotation dans le boîtier (1) de manière à pouvoir se déplacer angulairement pas à pas d'au moins 360°, ladite broche étant solidaire d'une tête (7) montée à rotation autour d'un axe géométrique orthogonal à celui de rotation de la broche (2), des moyens optiques (14, 16, 17) d'amener le rayon laser dans l'axe géométrique de la tête (7) après qu'il ait traversé la broche suivant un trajet confondu avec ledit axe et un prisme (18) solidaire de la tête (7) et propre à réfléchir le rayon laser (15a, 15b) dans un plan mobile renfermant l'axe géométrique de la broche (2).

2. Projecteur suivant la revendication 1, caractérisé en ce que les moyens optiques comprennent un premier prisme séparateur fixe (14) et un ensemble de prismes (16-17) monté sur la broche (2).

3. Projecteur suivant la revendication 1, caractérisé en ce que la tête (7) est animée d'un mouvement de rotation de 180°, soit 90° dans une direction et 90° dans l'autre à partir d'une origine.

4. Projecteur suivant la revendication 1, caractérisé en ce que la broche (2) supporte un système de motorisation pas à pas (13) qui entraîne la rotation d'un pignon (12) engrenant avec une crémaillère (11) solidaire d'une autre crémaillère (9) qui engrène avec une couronne dentée (8) placée autour de la tête (7) afin que celle-ci tourne quand le système de motorisation est alimenté.

5. Dispositif de mesure à distance du genre comprenant deux appareils pointés sur les points dont on doit relever les coordonnées, caractérisé et en ce que les appareils sont des projecteurs de rayon laser (I et II) pilotés et asservis en position, établis chacun conformément à l'une quelconque des revendications précédentes, et un unique émetteur de rayon laser (21) alimentant les deux projecteurs par chacun de leurs prismes (14, 14').

6. Dispositif suivant la revendication 5, caractérisé en ce qu'il comprend des moyens de transmettre les valeurs angulaires a, a' de chacun des points de rencontre des deux rayons laser (15a, 15b) à un calculateur qui fournit les coordonnées cartésiennes desdits points et vice versa.

7. Appareil suivant l'une quelconque des revendications précédentes, caractérisé en ce qu'il est pourvu de moyens lui permettant de fonctionner en atmosphère hostile et/ou contaminée par des rayonnements nucléaires.

*Fig.1*

0300934

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| A | DE-A-3 612 751 (LICENTIA)<br>* colonne 2, lignes 4-14 *<br>--- | 1 | G 02 B 26/08<br>G 01 C 3/10 |
| A | DE-A-3 036 427 (HITACHI)<br>* page 9 au dessus, figure 3 *<br>--- | 1 | |
| A | DE-A-2 719 016 (ASAHI KOGAKU)<br>* revendication 1 *<br>--- | 1 | |
| A | DE-A-2 623 369 (GÜDESEN et al.)<br>* revendication *<br>--- | 5 | |
| A | DE-U-8 234 635 (BALDACCHINI)<br>* revendication 7 *<br>--- | 6 | |
| A | FR-A-2 522 409 (CGR MEV)<br>* revendication 1 *<br>----- | 6 | |

|  |
|---|
| **DOMAINES TECHNIQUES RECHERCHES (Int. Cl.3)** |
| B 23 K 26/02<br>G 01 C 3/10<br>G 02 B 7/18<br>G 02 B 26/00 |

Le présent rapport a été établi pour toutes les revendications

| Lieu de la recherche | Date d'achèvement de la recherche | Examinateur |
|---|---|---|
| BERLIN | 26-09-1988 | FUCHS R |

EPO FORM 1503 03.82 (P0402)